# EUROPEAN PATENT APPLICATION

(11) **EP 1 117 030 A2**
(43) Date of publication of application: **18.07.2001**
(21) Application number: 01300193.8
(22) Date of filing: 10.01.2001
(51) Int. Cl.: G06F 3/16

(54) **Multimedia device for computer**

(30) Priority: 10.01.2000 KR 2000000976
(71) Applicant: Newq System, Co., Ltd., Seoul (KR)
(72) Inventor: Park, Jae-Sung, Ma-Po Gu, Seoul (KR)
(74) Representative: Needle, Jacqueline

(57) **Abstract**

A multimedia device for a computer is capable of reproducing audio signals from a variety of sound sources such as a compact disc, a digital video disc, a radio, games, etc. with a high quality of realistic sound. The multimedia device comprises a disc player (2) connected to a central processing unit (4) of the personal computer and arranged to play audio from a compact disc or a digital video disc, and an audio signal reproduction circuit (6) connected to the central processing unit (4) and arranged to process audio data from the disc player (2) to reproduce and output an audio signal. An audio signal amplification circuit (8) receives an output audio signal from the audio signal reproduction circuit (6) and is arranged to output the amplified audio signal, for example, by way of a speaker (10). The device further comprises a housing (40) for retaining the device. The housing is secured in a body of the computer and includes an operation unit (42) for operating the device and a display (28) providing a visual indication of the operating state of the device. The device further comprises an adapter (36) supplying power to the device separately from a main power supply of the computer.

## Description

The present invention relates to a multimedia device for a personal computer which is capable of controlling and outputting a variety of audio/video signals processable by the personal computer.

With the modern technology that has been developed, computers have been developed beyond simple calculation functions and now act as multimedia equipment capable of synthetically implementing an audio, a video, a karaoke, games, etc. To this end, in the computers, there have been provided a variety of software modules with specific functions and a variety of multimedia-embodying means such as a television (TV) reception card, sound card, moving picture experts group (MPEG) card, etc.

The effort to reproduce an audio signal through a computer began with an audio signal reproduction circuitry board, typically called a "sound card", and has since advanced to reproduce audio signals with improved quality of sound.

A conventional computer audio device comprises a sound card and compact disc (CD) player which cooperate to reproduce an audio signal. A software module is used in the conventional audio device to select a desired tune and adjust the volume of the selected tune. The use of such a software module makes it inconvenient for the user to manipulate the audio device while conducting other work through the computer. Namely, in order to suddenly turn off the audio device or lower the volume while working with the computer, the user has to display a picture provided from the software module on a screen of the computer and click on a desired button in the displayed picture.

A computer audio device is described in US Patent No. 5,751,816, where the device is retained in a housing secured in a drive bay of the computer body, and configured so as to be convenient to manipulate the volume. Further, the device is able to input an external sound.

However, the device described in this patent is not suitable for multimedia equipment for computers being developed currently, in that it places emphasis only on amplification of an audio signal, adjusts the quality of sound only within a basic range as in existing audio dedicated devices and provides only a function of inputting an external sound.

On the other hand, a digital video disc (DVD) and a player thereof have recently been developed to allow the user to appreciate a video with a satisfactory quality of picture through a computer. The use of such a DVD player enables the user to personally appreciate a movie with a superior quality of picture through a TV, personal computer (PC), etc. However, the user cannot have a satisfactory feeling in appreciating a movie using an existing DVD player for a PC because of limitations in audio reproduction and output of the PC itself. This problem is similarly applicable to computer games, a karaoke, etc. as well as videos. Consequently, the user will be able to enjoy a multimedia system more satisfactorily using a more superior audio device.

It is an object of the present invention to provide a multimedia device which reduces the problems discussed.

According to the present invention there is provided a multimedia device for a computer comprising a disc player arranged to play any optical disc, audio signal reproduction means arranged to process audio data from said disc player to reproduce and output an audio signal, and means for amplifying an output audio signal and outputting the amplified audio signal through a speaker, the multimedia device further comprising:
a housing for retaining said disc player and said audio signal amplification means, said housing being arranged to be secured in a body for said computer and having operation means installed in a part of said housing for operating said multimedia device, and display means installed in said part of said housing for providing a visual indication of the operating state of said multimedia device.

It is an advantage of an embodiment of the present invention that a multimedia device is operable separately from a monitor of a computer.

An embodiment of the present invention provides an improved multimedia device for a computer which is capable of allowing the user to conveniently listen to music data from a variety of sound sources such as a DVD, a radio, games, etc. as well as a CD with a high quality of realistic sound reproduction.

An embodiment of the present invention provides a multimedia device for a computer wherein a graphic equalizer is contained to provide an excellent visual effect.

In an embodiment, a multimedia device of the invention is simple to install and compatible with other equipment.

In an embodiment, a multimedia device for a computer has a variety of functions including functions of receiving, storing and reproducing an external sound signal.

According to an embodiment of the present invention, there is provided a multimedia device for a personal computer comprising a disc player connected to a central processing unit of the personal computer and adapted to play back any one of either a compact disc or digital video disc, audio signal reproduction means connected to the central processing unit of the personal computer and adapted to process audio associated data from the disc player to reproduce and output an audio signal, and audio signal amplification means for amplifying an output audio signal from the audio signal reproduction means and outputting the amplified audio signal externally through a speaker, wherein the improvement comprises a unitary housing for retaining the disc player and the audio signal amplification means, the unitary housing being adapted to be secured in a drive bay of a body of the personal computer and including operation means installed in a front part of the housing for operating the multimedia device and display means installed in the front part of the housing for providing a visual indication of an operating state of the multimedia device to the user.

Preferably, the multimedia device may further comprise an adapter for supplying power to the multimedia device separately from a main power supply of the personal computer, whereby the user can appreciate the compact disc using the operation means without booting the personal computer.

Embodiments of the present invention will hereinafter be described, by way of example, with reference to the accompanying drawings, in which:
Fig. 1 is a block diagram showing the construction of a multimedia device for a computer in accordance with an embodiment of the present invention;
Fig. 2 is a block diagram showing an audio signal amplification circuitry in a device of Fig. 1;
Fig. 3 is a circuit diagram showing current control circuitry of a multimedia device of the invention;
Figs. 4a and 4b illustrate examples of an operating panel of a multimedia device for a computer of the invention; and
Fig. 5 is a perspective view illustrating a state where a multimedia device of the invention is installed in the body of a computer.

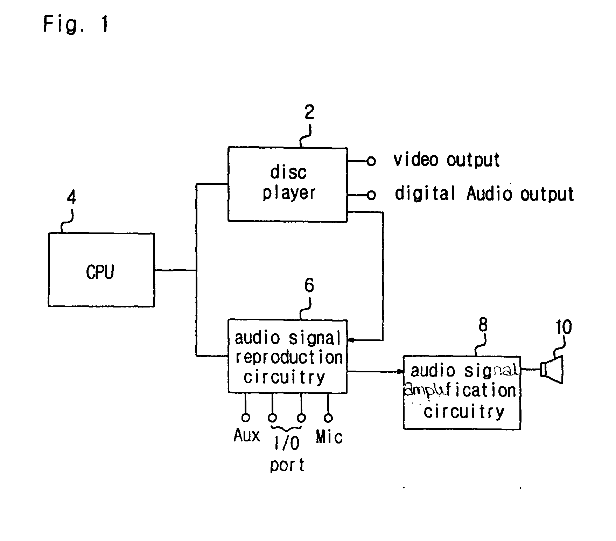

With reference to Fig. 1, there is schematically shown in block form the construction of a multimedia device for a computer in accordance with the present invention.

In Fig. 1, the reference numeral 2 denotes a disc player for playing back any one of either a compact disc (CD) or digital video disc (DVD) and outputting a video signal, digital audio signal and analog audio signal. The disc player 2 comprises a disc drive, optical pickup and signal processor, not shown, for the playback of the CD and DVD.

The disc drive is adapted to drive the CD or DVD. To this end, the disc drive includes a spindle motor for turning the disc, a carriage motor for carrying a pickup assembly in a radial direction of the disc, and a loading motor for forward and backward motion of a tray in which the disc is loaded. Each motor is controlled by a servo and operated in a bipolar manner by means of a two-channel operational amplifier.

The optical pickup is adapted to detect various data stored on the disc by emitting laser beams on a desired portion of the disc and picking up beams reflected therefrom by virtue of a photodiode.

The signal processor is adapted to discriminate the type of the data detected by the optical pickup, decode the detected data into a format corresponding to the discriminated type and output the decoded data as a digital signal or an analog signal by means of a digital/analog converter (DAC) as needed.

The signal processor is further adapted to perform a demodulation function, error correction function and video signal/audio signal separation function.

The disc player 2 further includes a decoder connected to a central processing unit (CPU) 4 of the computer via a data bus for processing data of an MPEG format. That is, the decoder is adapted to decode MPEG data from the CPU 4 of the computer and output the decoded result in a digital and/or analog form.

An output analog audio signal from the disc player 2 is transferred to an audio signal reproduction circuitry (typically referred to as a "sound card") 6 via a compact disc-read only memory (CD-ROM) interface. In the present embodiment, the audio signal reproduction circuitry 6 includes an auxiliary input terminal AUX, input/output (I/O) ports and a microphone input terminal Mic and is also connected to the CPU 4 of the computer via the data bus. The audio signal reproduction circuitry 6 is adapted to process external audio associated data to reproduce and output an audio signal in a desired form. The construction and operation of the audio signal reproduction circuitry are well known in the art and a detailed description thereof will thus be omitted.

The multimedia device further comprises an audio signal amplification circuitry 8 connected to an output terminal Line Out of the audio signal reproduction circuitry 6 for amplifying an output audio signal from the reproduction circuitry 6 and outputting the amplified audio signal externally through a speaker 10.

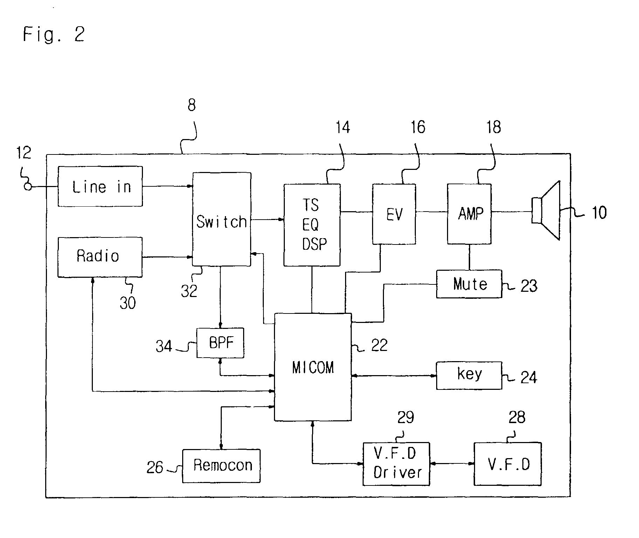

With reference to Fig. 2, there is in detail shown in block form the construction of the audio signal amplification circuitry 8 in Fig. 1.

The audio signal amplification circuitry 8 consists of a pre-amplifier and a main amplifier, typically called a power amplifier, in a similar manner to a general amplification circuitry. The pre-amplifier functions to select an output audio signal from the audio signal reproduction circuitry 6, adjust the volume of the selected audio signal, amplify the resultant audio signal and transfer the amplified audio signal to the main amplifier. The main amplifier acts to amplify an output audio signal from the pre-amplifier to a high power level capable of driving the speaker 10.

In more detail, the output audio signal from the audio signal reproduction circuitry 6 is received through an input terminal 12 and then directed to the speaker 10 via a tone controller 14, electronic volume (EV) 16 and main amplifier 18 under the control of a microcomputer 22. A key operation unit 24 is connected to the microcomputer 22 and operated in a manual manner by the user for the control of the amplification circuitry 8, as will be mentioned later in detail.

As an alternative, the audio signal amplification circuitry 8 may include an infrared-ray sensor so that it can be conveniently controlled by a remote controller 26.

A display 28, which may preferably be a vacuum fluorescent display (VFD), is adapted to provide a visual indication of the operating state of the multimedia device to the user under the control of a VFD driver 29 connected to the microcomputer 22.

The audio signal amplification circuitry 8 may preferably employ a digital signal processing (DSP) system for dynamically controlling the quality of sound according to genres of music to provide the user with the impression of listening to the music in a live setting such as a hall, live club or stadium.

The tone controller 14 may preferably include a tone selector and a digital equalizer and employ a TruSurround (TS) system for supporting Dolby stereoscopic sound.

As an alternative, a radio receiver 30 may be connected in parallel to the input terminal 12 which is connected directly to the audio signal reproduction circuitry 6. A mode switch 32 is connected to the microcomputer 22 via a band pass filter (BPF) 34 to select one of an audio signal from the CD/DVD player 2 and an audio signal from the radio receiver 30 under the control of the microcomputer 22. The mode switch 32 may preferably be a function switch dedicated integrated circuit (IC).

The radio receiver 30 includes components necessary to the reception of a radio frequency signal, such as an external antenna, radio frequency amplifier, frequency converter, tuner, etc.

A mute circuit 36 is connected between the main amplifier 18 and the microcomputer 22 to limit the output of the main amplifier 18 in response to an operation by the key operation unit 24 or remote controller 26.

The operation of a multimedia device constructed as described above will now be explained.

As stated previously, the disc player 2 may further include a decoder and encoder for decoding and encoding an MPEG file, respectively. By means of this construction, a real-time input audio signal can be compressed and stored in the form of an MPEG file, and MPEG audio data from the CPU can be decoded, amplified and reproduced through the speaker. The compressed and stored file may be transmitted to an external system over a data communication network.

Further, a music file stored on a hard disc of the computer may be transferred to the audio signal amplification circuitry 8 through the audio signal reproduction circuitry 6 under the control of the user so that it can be reproduced. As a result, a music file downloaded over the Internet can be stored or reproduced.

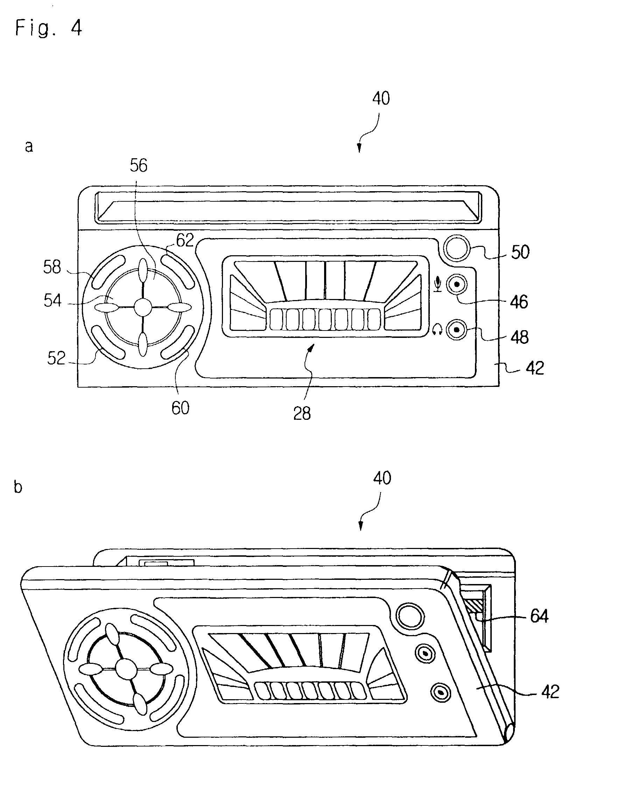

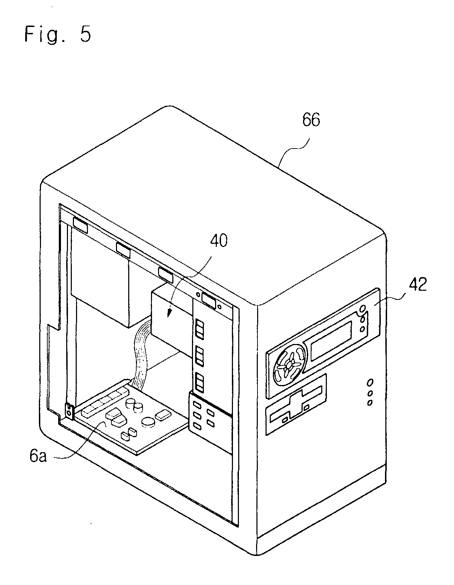

The audio signal amplification circuitry 8 and disc player 2 are retained in a unitary housing secured in a drive bay (more particularly, a 5.25 inch form factor drive bay) of the computer. The audio signal amplification circuitry 8, disc player 2 and audio signal reproduction circuitry 6 may also be configured in the unitary housing, as indicated by the reference numeral 40 in Figs. 4 and 5. Namely, all components in the computer associated with multimedia are integrated in the unitary housing, thereby enabling a consumer to purchase

and install the multimedia device more conveniently.

Therefore, the present multimedia device will hereinafter be regarded as one unit.

A part of the multimedia device may be used even where the computer is not powered on. In other words, the multimedia device can receive 9V DC power directly from an adapter connected to an external AC power source of 110V/220V. Hence, the user can selectively appreciate either a radio or CD without booting the computer.

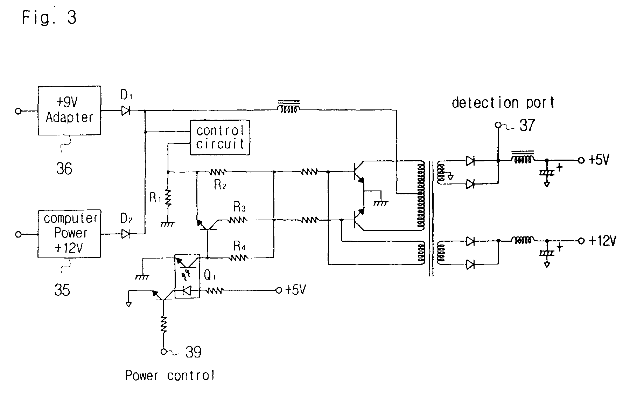

Fig. 3 is a circuit diagram showing the construction of a current control circuitry of a multimedia device for the computer of the invention. The current control circuitry in Fig. 3 is adapted to selectively supply power from a main power supply 35 of the computer or adapter 36 to the multimedia device.

A detection port 37 is connected to the multimedia device to check voltage (for example, 0 volt) when the multimedia device is not in operation and make a power control terminal 39 active in accordance with the checked result. At this time, a control circuit 38 functions to block the supply of power from the adapter 36, thereby causing all components in the computer to be supplied with power from the main power supply 35. The current control means shown in Fig. 3 may preferably include a DC-DC converter for, when the computer is powered on, supplying 12V DC power from the main power supply 35 to the multimedia device and blocking the supply of power from the adapter 36.

Fig. 4a is a front view of an operating panel of the multimedia device for the computer in accordance with the present invention and Fig. 4b is a perspective view showing an opened state of the operating panel, wherein the reference numeral 40 denotes the multimedia device and the reference numeral 42 denotes the operating panel. Also, Fig. 5 is a perspective view

illustrating the installation of the multimedia device in the body of the computer.

The operating panel 42 and display (preferably, VFD) 28 are installed in the front part of the multimedia device, thereby allowing the user to conveniently control the device and view the operating state of the device.

Displayed on the display 28 are, for example, a sound level, an SRS, a selected quality of sound (a TS and DSP), a radio frequency, etc. As one of functions of the VFD, the display 28 can display such items in various manners according to user's selections.

Installed in the front part of the operating panel 42 are a microphone terminal 46 and headphone terminal 48 for connecting a microphone or external equipment to the multimedia device, as is well known in the art.

The operating panel 42 has a variety of adjustment buttons for operating the multimedia device, which may preferably be a power switch button 50, function selection button 52 and volume adjustment button 54. The adjustment buttons may further be a CD/DVD track search button 56, a TS selection button 58 and a button 60 for selecting a display method of the VFD, as in a general audio system. An equalizer selection button 62 may further be provided in the operating panel 42 to select one of a variety of predetermined sound modes (for example, normal, rock, pops, classics, etc.).

As shown in Fig. 4b, the operating panel 42 is configured so as to be pivoted around its lower edge to open forward, in the same way as a general cassette tape player. For appearance, a disc drive tray 64 is installed behind the operating panel 42 such that it can be withdrawn in a forward direction from the multimedia device. This configuration is well known in the art and a detailed description thereof will thus be omitted.

With reference to Fig. 5, an audio signal reproduction circuitry board 6a is fixed to the body of the computer via a slot in the same way as a general sound card. The multimedia device 40 is secured in the computer body such that its front operating panel 42 can be directed toward the front of the computer body. As stated previously, the audio signal reproduction circuitry board 6a may be installed within the multimedia device 40. Alternatively, the audio signal reproduction circuitry board 6a may be installed separately from the multimedia device 40 and a part of the components in the multimedia device 40 may be provided on the circuitry board 6a. For example, the radio receiver may be installed on the circuitry board 6a. At any rate, it is preferred that the multimedia device 40 be supplied with power from the adapter (see the reference numeral 36 in Fig. 3). These modifications are options for ease of manufacture and compatibility with other equipment.

As apparent from the above description, a multimedia device for a computer as described is individually operable without running a software module in the computer body. Therefore, the user can operate the multimedia device without powering on the computer and thus requiring a booting period of time and power consumption for computer activation.

Further, the user can personally, rapidly and conveniently adjust the volume, quality of sound and sound effect freely in a hardware manner. Moreover, the user can conveniently listen to music data from a variety of sound media such as a DVD, a radio, games, etc. as well as a CD with a high quality of realistic sound reproduction.

It will be appreciated that modifications of, and variations in, the embodiments of the invention as described and illustrated may be made within the scope of the accompanying claims.

## Claims

1. A multimedia device for a computer comprising a disc player arranged to play any optical disc, audio signal reproduction means arranged to process audio data from said disc player to reproduce and output an audio signal, and means for amplifying an output audio signal and outputting the amplified audio signal through a speaker, the multimedia device further comprising:
a housing for retaining said disc player and said audio signal amplification means, said housing being arranged to be secured in a body for said computer and having operation means installed in a part of said housing for operating said multimedia device, and display means installed in said part of said housing for providing a visual indication of the operating state of said multimedia device.

2. A multimedia device as claimed in Claim 1, further comprising an adapter for supplying power to said multimedia device separately from a main power supply of said computer.

3. A multimedia device as claimed in Claim 1 or Claim 2, further comprising:
an adapter for supplying power to said multimedia device even when the computer is not powered on; and
current control means coupled to an output terminal of said adapter and arranged, when said computer is powered on, to block the supply of power from said adapter and supply power from a main power supply of said computer to said multimedia device.

4. A multimedia device as claimed in any preceding claim, wherein said audio signal amplification means comprises:
a pre-amplifier for adjusting the audio signal in response to operation means; and
a main amplifier for amplifying an output audio signal from said pre-amplifier to a high power level capable of driving a speaker.

5. A multimedia device as claimed in Claim 4, wherein said audio signal amplification means further comprises a sensor enabling said amplification means to be controlled by a remote controller.

6. A multimedia device as claimed in Claim 5, wherein said audio signal amplification means further comprises:
a radio receiver; and
a mode switch for selecting one of an audio signal from said radio receiver and an audio signal from said disc player to allow the user to selectively select audio from a radio or from said disc player.

7. A multimedia device as claimed in any preceding claim, wherein said display means comprises a vacuum fluorescent display.

8. A multimedia device as claimed in any preceding claim, wherein said disc player comprises:
an encoder for compressing and storing a real-time input audio signal in the form of an MPEG file; and
a decoder for decoding and reproducing MPEG audio data from said computer.

9. A multimedia device as claimed in any preceding claim, wherein said audio signal amplification means is arranged to control the quality of sound in a digital signal processing manner.

10. A multimedia device for a personal computer comprising a disc player connected to a central processing unit of said personal computer and adapted to play back any one of either a compact disc or digital video disc, audio signal reproduction means connected to said central processing unit of said personal computer and adapted to process audio associated data from said disc player to reproduce and output an audio signal, and audio signal amplification means for amplifying an output audio signal from said audio signal reproduction means and outputting the amplified audio signal externally through a speaker, wherein the improvement comprises:
a unitary housing for retaining said multimedia device, said unitary housing being adapted to be secured in a drive bay of a body of said personal computer and including operation means installed in a front part of said housing for operating said multimedia device and display means installed in said front part of said housing for providing a visual indication of an operating state of said multimedia device to the user.
